# FASCICULE DE BREVET EUROPEEN

(11) **EP 1 456 999 B1**
(45) Date de publication et mention de la délivrance du brevet: **08.03.2006**
(21) Numéro de dépôt: 02799783.2
(22) Date de dépôt: 05.12.2002
(51) Int. Cl.: H04L 9/32

(54) **PROCEDE DE SIGNATURE ELECTRONIQUE**
VERFAHREN ZUR DIGITALEN UNTERSCHRIFT
ELECTRONIC SIGNATURE METHOD

(30) Priorité: 21.12.2001 FR 0116793
(43) Date de publication de la demande: 15.09.2004
(73) Titulaire: Société Française du Radiotéléphone, 92915 Paris la Défense (FR)
(72) Inventeur: WARY, Jean-Philippe, F-92340 Bourg la Reine (FR); BAILLIARD, Guillaume, F-78430 Louveciennes (FR)
(74) Mandataire: Schmit, Christian Norbert Marie
(86) Numéro de dépôt international: PCT/FR2002/004197
(87) Numéro de publication internationale: WO 2003/056749

(56) Documents cités:
- EP-A- 0 328 232
- WO-A-00/25245

## Description

La présente invention a pour objet un procédé de signature électronique. La présente invention est du domaine de la signature électronique au sens des directives européennes et des décrets français. Le domaine de l'invention est aussi celui des transactions intervenant entre un abonné à un réseau de télécommunication, et un prestataire utilisant ledit réseau de télécommunication pour proposer des services.

Un but de l'invention est de mettre en place un système de signature électronique simplifié sur un réseau fermé, comme par exemple un réseau cellulaire de téléphonie mobile ou un réseau de télévision à péage. Un autre but de l'invention est de permettre d'établir une chaîne de preuves entre un signataire, par exemple un abonné, un opérateur et un prestataire, par exemple un fournisseur de service, de contenu, ou un marchand, afin de pouvoir sécuriser une transaction réalisée entre le signataire et le prestataire. Un autre but de l'invention est de simplifier les moyens mis en oeuvre au niveau d'un terminal utilisé par un abonné pour effectuer une transaction. Un autre but de l'invention est de rendre les mécanismes de certification le plus transparent possible pour ses utilisateurs, à savoir l'abonné et les prestataires.

Dans le domaine des transactions, les transactions les plus connues sont celles qui correspondent à des achats et des ventes. Toutefois, il est possible par ailleurs de considérer comme une transaction le fait de transmettre des informations à un partenaire, charge à ce dernier de vérifier que les informations qui lui sont transmises ne sont pas entachées de tromperies. On peut également envisager l'utilisation de l'invention dans le cadre du contrôle d'accès, la transaction résulte dans ce cas d'une demande d'autorisation d'accès. Pour simplifier, l'invention sera décrite dans le cadre d'une opération d'achat, parce qu'une telle opération est bien représentative de l'ensemble des problèmes qui peuvent se présenter au cours d'une telle transaction. Mais toutes les transactions sont concernées par l'invention.

Dans le domaine des achats, notamment des achats sur le réseau Internet, un acheteur, par exemple un utilisateur d'un téléphone mobile, se connecte à un fournisseur de service en particulier au cours d'une session WAP (Wireless Application Protocol c'est-à-dire protocole d'application sans-fil) ou voix. Au cours de cette session, l'utilisateur convient avec un prestataire d'une transaction. Le prestataire est alors un fournisseur de biens ou de services qui met ses biens ou ses services à disposition de l'utilisateur au travers d'une transaction (la consommation du bien pouvant être immédiate: par exemple, dans le cas d'un contenu musical ou différée dans le cas d'une commande en ligne). Cette transaction est réalisée par un échange de messages entre l'utilisateur et le prestataire. Ces messages de transaction sont composés du côté utilisateur et du côté prestataire. Il s'agit de messages électroniques composés soit par le téléphone mobile sous contrôle de l'utilisateur, soit par un serveur du prestataire, ce serveur étant alors connecté au réseau Internet ou accédant au réseau de l'opérateur mobile. Si la transaction consiste en un achat, les messages échangés comportent principalement les informations suivantes : un identifiant de l'acheteur, un identifiant du produit acheté, une quantité de produit acheté, un prix unitaire pour le produit, ainsi qu'un horodatage. Dans le cas d'une vente, le message de transaction peut être signé par le prestataire avant son émission vers l'utilisateur. Le chiffrement des transactions n'est pas une obligation de sécurité mais peut être mis en oeuvre pour renforcer le niveau de celle-ci. L'utilisateur n'a alors plus qu'à vérifier la signature du message, si celle-ci est présente, puis s'il a confiance dans le schéma de signature utilisé par le prestataire et si le contenu descriptif de la transaction correspond à son attente, l'utilisateur peut signer le message reçu pour le renvoyer, pour accord, vers le prestataire. A réception du nouveau message par le prestataire, celui-ci analyse le contenu du message, sa cohérence et valide la signature apposée par l'utilisateur sur ce message. Si la signature est valide, le prestataire peut alors honorer sa part de la transaction.

Dans l'état de la technique la sécurisation d'une transaction entre un abonné et un prestataire est réalisée par la mise en oeuvre d'une technologie dite PKI (Public Key Infrastructure, c'est-à-dire infrastructure à clé publique). Pour pouvoir utiliser cette technologie, et donc réaliser une transaction avec un prestataire, l'abonné doit posséder un certificat, les plus connus des certificats étant les certificats X509. Un tel certificat est délivré par une autorité de certification sur la base des renseignements collectés par une autorité d'enregistrement. Le rôle de l'autorité d'enregistrement est de vérifier les données des demandes de certificat, en respect des procédures de sécurité établies par l'Autorité de Certification. Pour obtenir son certificat l'abonné doit donc fournir un certain nombre de renseignements à l'autorité d'enregistrement qui va s'assurer de la validité de ces informations avant de procéder à la demande de génération d'un certificat auprès de l'autorité de certification. L'autorité de certification délivre alors un certificat, par exemple X509. Un certificat X509 est un fichier, accessible à tous, comportant l'identité du titulaire de ce certificat, une clé publique, un numéro de série, une période de validité, la localisation d'une liste de révocations associées et un certain nombre d'autres renseignements sans objet pour l'invention.

Les technologies PKI sont basées sur les algorithmes de chiffrement dits asymétriques. De tels algorithmes utilisent une clé de chiffrement et une clé de déchiffrement différentes. On parle aussi de bi-clé. Un fichier chiffré avec l'une des clés du bi-clé ne peut être déchiffré qu'en utilisant l'autre clé du bi-clé. L'une des clés du bi-clé est dite privée, et connue du seul titulaire du certificat, l'autre clé du bi-clé est dite publique, et est connue de tous. C'est en général l'autorité de certification qui produit les bi-clés. L'autorité de certification renseigne aussi sur l'état de la corruption de la clé privée. L'autorité de certification garantit que la clé privée du bi-clé n'est connue que de son titulaire. L'autorité de certification répudie le certificat lorsqu'elle a acquis la conviction que la clé privée n'est plus privée. Le certificat devient alors inutile, il est répudié.

Ainsi dans l'état de la technique lorsque l'abonné est en possession du message de transaction, et d'un certificat X509, il peut signer la transaction. La signature de la transaction est réalisée, premièrement, par la production d'une empreinte numérique du message représentant la transaction, on parle de message de transaction ou tout simplement de transaction. On applique en général sur ce message de transaction un algorithme du type MD5 (Message digest 5, ou résumé de message 5) ou SHA (Secure Hash Algorithm, ou algorithme de hachage sécurisé). L'empreinte numérique du message est alors chiffrée en utilisant la clé privée du titulaire du certificat X509. Le résultat est appelé la signature -ou message de signature- électronique du message de transaction. Comme la clé privée est connue du seul titulaire du certificat, toute personne recevant cette signature et réussissant à la déchiffrer à l'aide de la clé publique du certificat est assurée que cette signature a bien été produite par le titulaire du certificat.

De plus les algorithmes de type MD5 ou SHA sont irréversibles, c'est-à-dire qu'il est impossible à partir du message haché de reconstituer le message d'origine. Dans la mesure où la personne recevant le message et la signature connaît l'algorithme qui a été utilisé pour le hachage, elle est capable de recalculer l'empreinte numérique et donc de le comparer au résultat du déchiffrage de la signature. On note qu'un certificat X509 renseigne aussi sur l'algorithme utilisé pour produire la signature. S'il y a concordance alors le message a été transmis correctement et par une personne identifiée. Le prestataire, ayant reçu le message de transaction et la signature l'accompagnant est alors assuré de la validité de la transaction.

Le document EP 3 28232décrit un procédé de signature éléctronique comprenant une étape de signature d'une transaction suivie d'une étape de contre-signature par une autorité centrale. Les algorithmes utilisés sont asymétriques.

La solution de l'état de la technique remplit donc bien les impératifs de confidentialité et de non-répudiation liés au bon déroulement d'une transaction. Cependant cette solution présente de nombreux inconvénients.

Un premier inconvénient est que l'abonné doit obtenir, auprès d'une autorité de certification, un certificat. Il doit donc entreprendre des démarches, de type administratives, pour obtenir ce certificat. Ces démarches ne sont pas d'une grande complexité, mais à l'heure actuelle, pour l'homme de la rue, la notion de certificat reste très obscure ce qui ne l'encourage pas à effectuer les démarches pour en obtenir un quand il n'en voit pas l'absolue nécessité.

Un deuxième inconvénient, est qu'un certificat est lié à un bi-clé, mis en oeuvre en utilisant un algorithme connu sous le nom de RSA. La robustesse de l'algorithme dépend, entre autres, de la longueur des clés du bi-clé.

L'inconvénient de l'état de la technique est alors que l'algorithme RSA est basé sur des factorisations de nombres. Sa mise en oeuvre réclame donc d'importants calculs, voire l'octroi de moyens spécialisés, par exemple un composant câblé, pour obtenir des performances compatibles avec une utilisation en temps réel. Par utilisation en temps réel on entend un temps d'attente compatible avec une interface homme machine (2 à 3 secondes). L'intégration de l'algorithme RSA, par exemple dans un téléphone mobile, augmente donc considérablement le coût de l'appareil.

Un troisième inconvénient de l'état de la technique est lié au second, l'opérateur de télécommunication mettant à la disposition de ses abonnés des moyens spécifiques à la mise en oeuvre de l'algorithme RSA n'a pas forcément de retour sur son investissement. En effet toutes les transactions peuvent être effectuées sans intervention spécifique de l'opérateur de télécommunication.

L'invention résout ces problèmes en plaçant l'opérateur de télécommunication au centre des transactions effectuées sur son réseau de télécommunication. Ainsi l'opérateur peut cumuler les rôles d'opérateurs de télécommunication, d'autorité d'enregistrement, d'autorité de certification et aussi, dans une moindre mesure de signataire des messages de transaction. Mais ce qui est fondamental, c'est qu'il garantit efficacement à l'utilisateur et au prestataire la validité de la transaction. La mesure est moindre car la seule chose qui soit laissée à l'opérateur pour les signatures est la mise en oeuvre des technologies PKI pour valider, en la sur-signant, une signature d'un abonné.

Dans l'invention un abonné souhaitant effectuer une transaction produit un message correspondant à cette transaction. Lorsque le message de transaction est constitué, celui-ci est signé grâce à des technologies de signature dites symétriques. De telles technologies sont basées sur l'utilisation de clés secrètes, utilisation cohérente avec des réseaux fermés de type réseaux de téléphonie mobile, ou télévision à péage, puisque, par définition, tous les acteurs sans exception sont connus. On sait en effet acheminer un secret dans de tel réseaux fermés (par la mise à disposition de carte à puces, carte SIM dans le cadre d'un réseau GSM/GPRS, par exemple). De plus les technologies de signature symétrique sont beaucoup moins gourmandes en ressources de calcul. Dans les technologies de signature symétrique on peut utiliser des algorithmes de chiffrement connus comme DES (Data Encryption Standard pour transcription standard de données), triple DES (trois DES) et encore AES (Advanced Encryption Standard c'est-à-dire Standard de chiffrement avancé). L'abonné utilise une clé secrète, connue par lui-même et par l'opérateur, pour produire une signature d'un message de transaction composé par l'abonné. Ce message et sa signature sont alors envoyés à l'opérateur qui vérifie la signature, puis sur signe (en technologie RSA par exemple) l'ensemble message de transaction et signature en utilisant des technologies de signature asymétrique avant d'envoyer le message de l'utilisateur vers le prestataire. Ce prestataire pouvant par exemple être localisé sur Internet, l'opérateur effectue une sur-signature utilisant le modèle communément mis en oeuvre sur Internet: la technologie PKI basée sur l'utilisation des certificats X509.

Dans l'invention l'opérateur joue le rôle d'autorité de certification. Cela signifie que c'est l'opérateur qui produit les certificats qu'utilisent ses abonnés pour effectuer des transactions. Ainsi l'opérateur peut, par exemple, décider d'associer une même bi-clé à plusieurs abonnés, le certificat étant alors différencié par les autres éléments qui le constituent, comme par exemple l'identité du titulaire du certificat, son numéro de série, sa date de création, ou sa date d'expiration.

Lorsqu'il reçoit le message de transaction et sa signature l'opérateur connaît formellement l'émetteur du message. Il est alors en mesure de retrouver la clé secrète associée à cet abonné. Il se sert de cette clé secrète pour vérifier la signature du message de transaction. Si son analyse de la signature valide celle-ci comme provenant de l'abonné, l'opérateur est alors en mesure de sur-signer l'ensemble de la transaction de l'abonné (c'est-à-dire le message de transaction et sa signature en technologie symétrique) avec son propre bi-clé opérateur avant d'émettre vers le prestataire le nouveau message. Le prestataire, lui ne sait pas analyser la signature effectuée par l'abonné, mais l'opérateur en sur-signant l'ensemble lui certifie la validité de la transaction. Le prestataire peut donc accepter cette signature. Le problème de confiance dans la signature d'un abonné inconnu s'est transformé en un problème de confiance dans un opérateur connu garantissant la validité de la transaction.

On remplit ainsi les impératifs de non-répudiation, de faible charge de calcul pour le terminal de l'abonné, et de visibilité par l'opérateur qui sont les objectifs recherchés par l'invention.

L'invention a donc pour objet un procédé de signature électronique caractérisé en ce qu'il comporte les étapes suivantes :
- on affiche (201) sur un terminal d'un utilisateur des informations relatives à la nature d'une transaction T entre l'utilisateur et un prestataire,
- on produit (203), sur le terminal, une signature de la transaction T pour authentifier la transaction T et l'auteur de la transaction T,
- on produit, sur le terminal, un premier message comportant les informations relatives à la nature de la transaction T et sa signature
- on émet (204), depuis le terminal, le premier message vers le serveur d'un opérateur de télécommunication,
- on reçoit (205), sur le serveur de l'opérateur de télécommunicaton, le premier message,
- on identifie, sur le serveur, l'utilisateur du terminal,
- on vérifie (206), sur le serveur, la validité de la signature,
- on produit (207), sur le serveur, une deuxième transaction comportant la transaction T, la signature de l'utilisateur du terminal, des informations relatives à l'identité de l'utilisateur du terminal,
- on produit (209) une signature correspondant à la deuxième transaction, cette signature étant appelée sur-signature de l'opérateur,
- on émet (210), depuis le serveur, un deuxième message comportant la deuxième transaction et sa sur-signature par l'opérateur vers le prestataire partie à la transaction T.

II est entendu que l'on se situe dans le cas spécifique ou l'utilisateur signe une transaction et l'émet vers le prestataire, le cas où le prestataire commence par signer une transaction avant de la soumettre à l'utilisateur pour signature se déduit également de ces étapes.

L'invention sera mieux comprise à la lecture de la description qui suit et à l'examen des figures qui l'accompagnent. Celles-ci sont présentées à titre indicatif et nullement limitatif de l'invention. Les figures montrent :
- Figure 1 : une illustration de moyens utiles à la mise en oeuvre du procédé selon l'invention ;
- Figure 2 : une illustration d'étapes du procédé selon l'invention ;
- Figure 3 : une illustration d'un message de transaction composé par un abonné ;
- Figure 4 : une illustration d'étapes mises en oeuvre pour la production d'un message signé et chiffré représentant la transaction.

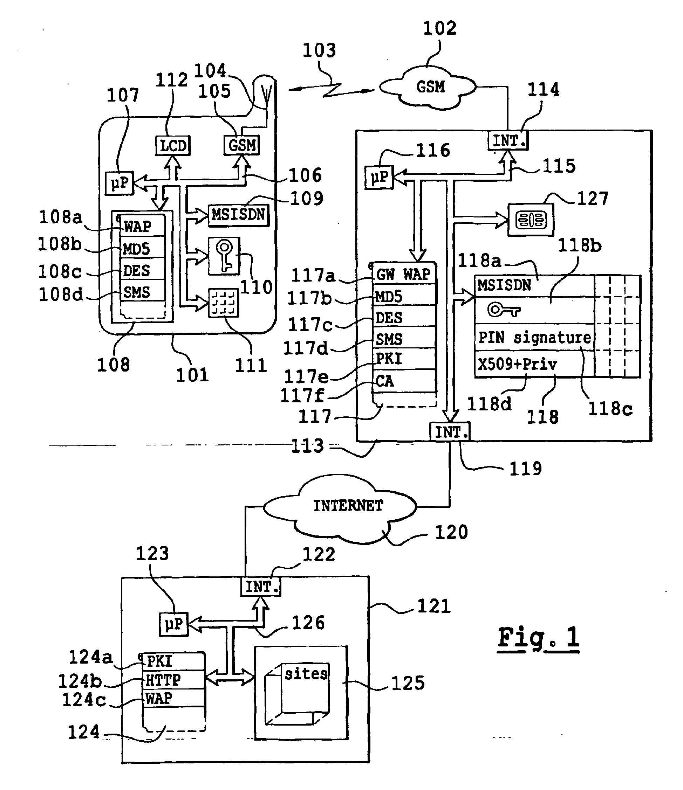

La figure 1 montre un téléphone 101 connecté à un réseau 102 de téléphonie mobile. Dans notre exemple le terminal permettant de recevoir, ou de produire, des informations relatives à la nature d'une transaction est donc un téléphone mobile. Dans la pratique il peut s'agir de tout type d'appareil permettant de se connecter à un réseau de télécommunication. De même on considère que le réseau 102 est un réseau GSM mais il pourrait s'agir de tout type de réseau de télécommunication parmi ceux existants, comme DCS, PCS, GPRS ou à venir comme l'UMTS.

Le téléphone 101 établit donc une liaison 103 hertzienne avec le réseau 102. Cette liaison est établie grâce à une antenne 104 du téléphone 101. L'antenne 104 est connectée à des circuits 105 GSM. Les circuits 105 ont un rôle de modulation et démodulation de signaux. D'une part ils démodulent les signaux reçus du réseau 102 via l'antenne 104 pour produire des signaux numériques. D'autre part les circuits 105 produisent des signaux analogiques, selon la norme GSM, à partir de signaux numériques. Les circuits 105 sont donc connectés à un bus 106.

Le téléphone 101 comporte aussi un microprocesseur 107 connecté au bus 106. Le microprocesseur 107 exécute des codes instruction enregistrés dans une mémoire 108 de programme. La mémoire 108 comporte plusieurs zones. Une zone 108A comporte des codes instruction relatifs à la mise en oeuvre du protocole de communication, par exemple, WAP ou HTTP. Une zone 108B comporte des codes instruction relatifs à la mise en oeuvre de l'algorithme de calcul d'empreinte numérique de type MD5 ou SHA-1.

Une zone 108c comporte les codes instructions relatifs à la mise en oeuvre d'un algorithme de chiffrement, par exemple DES, 3DES, EAS. Enfin une zone 108d comporte des codes instruction relatifs à l'émission et à la réception de messages SMS (Short Message System, pour service de messages courts). La mémoire 108 peut comporter d'autres zones comportant des codes instruction relatifs au fonctionnement général du téléphone 101, ou des zones de travail. Celles-ci ne sont pas représentées pour ne pas surcharger le dessin.

Dans notre exemple on a choisi l'algorithme de hachage MD5 mais il en existe d'autres comme par exemple l'algorithme SHA-1. La particularité de ces algorithmes est qu'ils produisent, à partir d'un message d'origine, une empreinte numérique qui caractérise le message d'origine. L'autre caractéristique de ces algorithmes est qu'il est impossible de reconstituer le message d'origine à partir du message numérique résultant du hachage.

Pour la zone 108c, et dans notre exemple, on a choisi l'algorithme DES, mais il en existe d'autres comme par exemple l'algorithme triple DES, qui sera utilisé de manière préférée, ou encore l'algorithme AES.

Le téléphone 101 comporte aussi une mémoire 109 pour enregistrer un identifiant de l'utilisateur du téléphone 101, par exemple son numéro MSISDN, c'est-à-dire son numéro de téléphone. Le téléphone 101 comporte aussi une mémoire 110 permettant d'enregistrer une clé d'abonné, qui est en fait une clé de signature propre à l'utilisateur du terminal. C'est cette clé qui permet à l'utilisateur, par exemple, de réaliser la signature de messages. Dans la pratique les mémoires 109 et 110 peuvent très bien être comprises dans une carte SIM. Le téléphone 101 comporte aussi un clavier 111 et un écran 112 permettant à l'utilisateur du téléphone 101 d'interagir avec celui-ci. Les éléments 109 à 112 sont connectés au bus 106.

Ces différents éléments décrits pour le téléphone 101 sont mis en oeuvre par le procédé selon l'invention.

La figure 1 montre un serveur 113 d'un opérateur d'un réseau de télécommunication, par exemple l'opérateur gérant le réseau 102. Le serveur 113 comporte des circuits 114 interfaces de connexion entre le serveur 113 et le réseau 102. Les circuits 114 sont connectés à un bus 115. Le serveur 113 comporte un microprocesseur 116 lui aussi connecté au bus 115. Le microprocesseur 116 exécute des codes instruction enregistrés dans une mémoire 117. La mémoire 117 comporte plusieurs zones.

Une première zone 117A comporte des codes instruction permettant au serveur 113 de se comporter comme une passerelle pour le protocole WAP par exemple. C'est les codes instruction de la zone 117A qui permettent à un utilisateur du terminal 101 de se connecter, via le protocole WAP, à des sites Internet, c'est-à-dire à des sites enregistrés sur un serveur accessible via le réseau Internet. Une zone 117B comporte des codes instruction correspondant à la mise en oeuvre de l'algorithme de calcul de l'empreinte numérique.

Une zone 117C comporte des codes instruction mettant en oeuvre l'algorithme DES. Une zone 117D comporte des codes instruction pour la mise en oeuvre de la réception et de l'envoi de messages courts. Une zone 117E comporte des codes instruction permettant la mise en oeuvre des technologies PKI. On rappelle que ces technologies comportent en particulier la mise en oeuvre d'algorithme de chiffrement asymétrique de type RSA.

La mémoire 117 comporte aussi une zone 117F comportant des codes instruction permettant au serveur 113 de se comporter comme un serveur de certification correspondant au rôle d'autorité de certification qui incombe, dans un mode de réalisation préféré, à l'opérateur du réseau 102 dans l'invention. Les codes instruction de la zone 117F permettent au serveur 113 de répondre à des requêtes émanant de prestataires agissant sur le réseau Internet et, ces prestataires cherchant à déterminer la validité d'un certificat X509.

Le serveur 113 comporte une mémoire 118 de stockage d'informations sur les abonnés à l'opérateur auquel appartient le serveur 113. La mémoire 118 est structurée comme une base de données. Dans la pratique on a représenté la mémoire 118 comme une table comportant autant de colonnes qu'il y a d'abonnés au réseau de l'opérateur, et autant de lignes qu'il y a d'informations à enregistrer pour chaque abonné. La figure 1 montre quelques unes des lignes de la table 118. La table 118 comporte une ligne 118A permettant d'enregistrer un identifiant de l'abonné, par exemple son numéro MSISDN. Une ligne 118B permet d'enregistrer une clé, secrète, (stockée de façon chiffrée ou non) de chiffrement utilisée pour les vérifications de signatures émises par le terminal 101. Une ligne 118C permet d'enregistrer un code personnel de l'utilisateur du terminal 101 permettant, par exemple de valider la procédure de production d'une signature électronique effectuée par l'utilisateur du terminal 101. Une ligne 118D permet d'enregistrer les informations correspondant à un certificat, par exemple selon la norme X509. Dans ce cas la ligne 118D comporte, pour chaque abonné titulaire d'un certificat, au moins la partie publique du bi-clé. La mémoire 118 est connectée au bus 115.

Le serveur 113 comporte aussi une interface 119 de connexion avec le réseau Internet. L'interface 119 est connectée au bus 115.

La figure 1 montre un ensemble de fonctionnalités, en particulier passerelle WAP, technologie PKI, autorité de certification et enregistrement des informations sur les abonnés, concentrées sur un même serveur 113. Dans la pratique toutes ces fonctionnalités peuvent effectivement être cumulées sur un seul et même serveur, ou être réparties sur plusieurs serveurs communiquant entre eux.

Le serveur 113 est donc connecté au réseau 120 (Internet dans notre description). Grâce à ce réseau il peut communiquer avec un serveur 121 d'un prestataire. Un prestataire est un acteur d'Internet qui propose ses services sur Internet, ou un acteur d'un autre réseau (moyen de communication) par lequel le terminal 101 est susceptible de recevoir/émettre des informations relatives à une transaction. Il peut s'agir de service de vente, ou de simple prestation de type traduction par exemple. La plupart du temps le serveur 121 est celui d'un hébergeur, c'est-à-dire d'une personne qui propose à des prestataires souhaitant agir sur le réseau Internet des technologies d'hébergement. Ainsi le serveur 121 comporte des circuits 122 interface de connexion avec le réseau 120 Internet, un microprocesseur 123 capable d'exécuter des codes instruction enregistrés dans une mémoire 124. La mémoire 124 est divisée en plusieurs zones, l'une de ces zones 124A comporte des codes instruction permettant de mettre en oeuvre des algorithmes en relation avec les technologies PKI. Une zone 124B comporte des codes instruction permettant au serveur 121 de se comporter comme un serveur dit WEB, c'est-à-dire des codes instruction permettant la mise en oeuvre du protocole HTTP (Hypertext transfer protocol, ou protocole de transfert hypertexte). Une zone 124C comporte des codes instruction permettant la mise en oeuvre du protocole WAP. Ainsi un utilisateur muni d'un terminal tel que le téléphone 101 peut se connecter au serveur 121 qui reconnaît le protocole WAP. Le serveur 121 comporte aussi une mémoire 125 où sont enregistrés différents sites, notamment celui du prestataire. Les sites sont décrits sous forme de fichiers, par exemple au format WML (Wireless Mark-up Language c'est-à-dire langage de balise sans fil). Les éléments 122 à 125 sont connectés via un bus 126.

Pour la suite de la description lorsque l'on prête une action à un appareil, que ce soit le terminal 101, le serveur 113 ou le serveur 121, cette action est en fait effectuée par le microprocesseur de l'appareil commandé par les codes instruction enregistrés dans la mémoire de programme de l'appareil. On rappelle aussi qu'une transaction est liée à un message de transaction, les deux termes étant employés indifféremment. Il en va de même pou signature et message de signature. En effet, dans la pratique, une transaction et une signature sont représentées par une séquence de bits, celle-ci étant alors un message binaire, c'est-à-dire un message composé de bits.

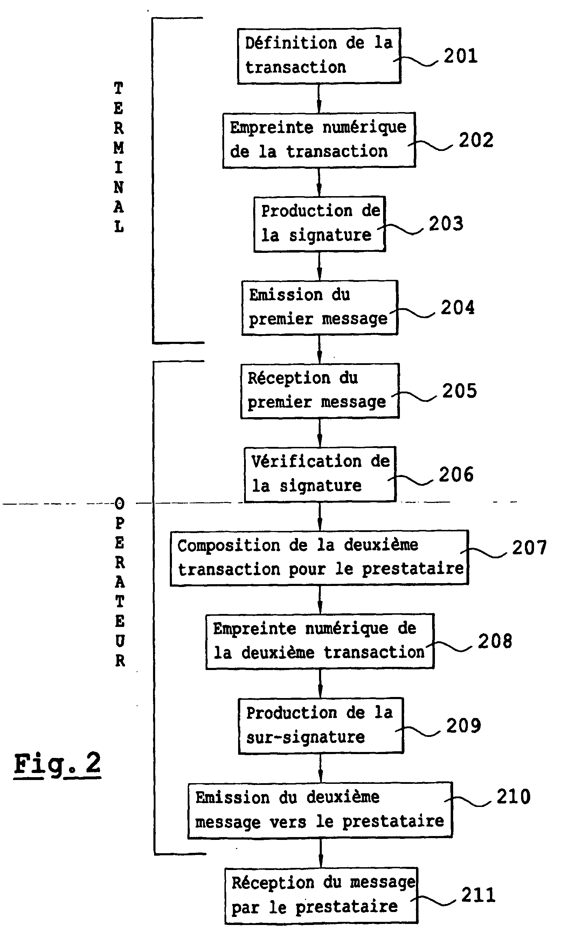

La figure 2 montre une étape 201 préliminaire d'affichage de la transaction. Dans l'étape 201 un abonné au réseau 102 utilise le terminal 101 pour définir une transaction. Cela signifie que l'utilisateur du terminal 101, abonné au réseau 102, utilise le clavier 111 et l'écran 112 pour effectuer une connexion, par exemple par le protocole WAP, à un serveur d'un prestataire. Ce serveur émet ensuite des informations via le serveur 115 qui se comporte alors comme une passerelle WAP. Les informations permettent au téléphone 101 d'afficher les différents services proposés par le prestataire sur l'écran 112 du téléphone 101. L'utilisateur choisit alors l'un de ces services, obtenant ainsi l'identifiant de ce service, puis l'utilisateur utilise le clavier 111 pour valider la transaction. Au moment de la validation de la transaction, l'utilisateur du téléphone 101 (donc le téléphone 101) est en possession, de la référence 301 de l'article pour introduire une variabilité au niveau de la signature calculée (un numéro de série géré par le prestataire, un horodatage, une valeur aléatoire, la liste n'est pas exhaustive), du prix 302 unitaire de l'article, de la quantité 303 de l'article qu'il souhaite acquérir, de son identifiant 304 réseau sur le réseau 102. Il s'agit là des informations relatives à la transaction. De manière optionnelle l'utilisateur du terminal 101 est aussi en possession d'une URL 305 (Universal Resource Location, pour localisation universelle d'une ressource) permettant au destinataire de la transaction d'obtenir les données lui permettant de vérifier la validité de la transaction, et en particulier la validité de la sur-signature 310. L'ensemble des informations précédemment citées existe dans une mémoire du téléphone 101 sous forme électronique. Cela constitue un fichier. Ce fichier est l'ensemble des informations relatives à la nature d'une transaction. Il est aussi appelé un message 306 de transaction, ou transaction T. On passe alors à une étape 202 de résumé de la transaction T, ou de production d'une empreinte numérique de la transaction T.

Dans la pratique, le message 306 de transaction peut être affiché de bien des façons. Ce message peut être directement saisi par l'utilisateur sur son téléphone via le clavier, obtenu via un message court, ou tout autre possibilité permettant de saisir/obtenir les informations relatives à la transaction.

Dans la pratique, la validation de la transaction n'est effective qu'après la saisie, par l'utilisateur, d'un code de validation. Il s'agit par exemple d'un code à 4 chiffres dont la saisie permet de passer aux étapes suivantes. La saisie de ce code est équivalente à la saisie du code secret d'une carte bleue lors de l'utilisation de celle-ci. Cela garantit la non-répudiation du paiement. En effet celui qui a produit la signature connaissait alors le code de validation permettant de débloquer les étapes de production de cette signature.

Dans l'étape 202 le téléphone 101 applique au message 306 de transaction comportant les informations relatives à la nature de la transaction l'algorithme MD5 enregistré dans la zone 108B. On obtient ainsi un résumé numérique de la transaction. On passe à une étape 203 de production de la signature.

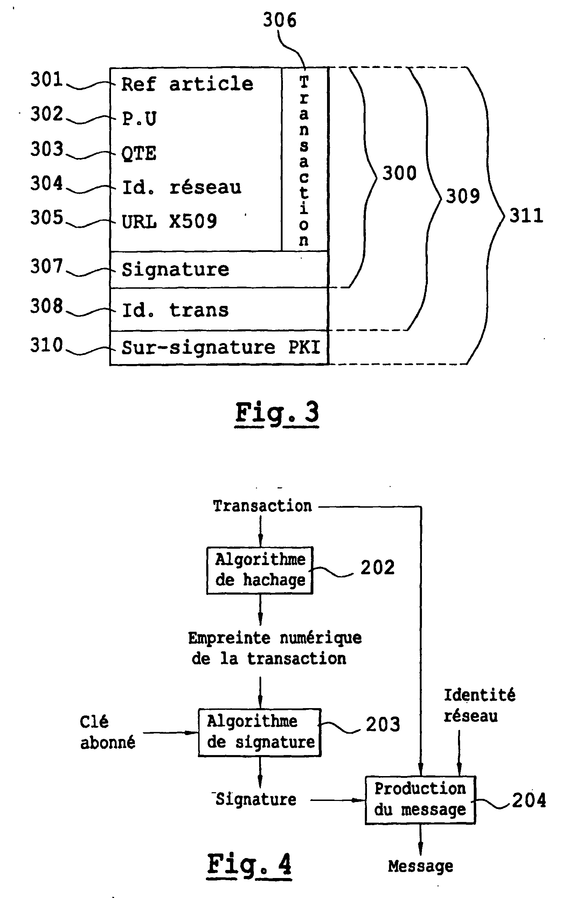

La figure 4 illustre elle aussi l'étape 203. La figure 4 montre qu'une signature est produite en utilisant un algorithme de chiffrement dont les entrées sont le résumé numérique de la transaction ainsi qu'un clé secrète de l'abonné. La clé secrète de l'abonné est enregistrée dans la mémoire 110 du téléphone 101. Le résultat de l'algorithme de signature est un message 307 de signature, ou une signature 307. L'algorithme de chiffrement utilisé pour la production de la signature 307 est, par exemple, l'algorithme de la zone 108c. En général, une signature est obtenue en appliquant un algorithme de chiffrement et une clé secrète à une empreinte numérique du message à signer.

Une fois le message 306 et sa signature 307 obtenus, on passe à une étape 204 d'émission de ce message 306 et de sa signature 307. Ils sont émis en direction du serveur 113, par exemple via un message court. On peut toutefois utiliser, pour l'émission, n'importe quel protocole de transmission, y compris des protocoles prévoyant un chiffrement des données transmises. On passe à une étape 205 de réception et du message et de sa signature par le serveur 113. L'ensemble formé par le message 306 et sa signature 307 est un premier message 300 émis par le terminal 101.

Dans l'étape 205 le serveur 113 reçoit un message court. L'en-tête de ce message court permet de déterminer qui a émis ce message. Le serveur 113 est alors en possession d'un identifiant de l'émetteur, il s'agit en général du numéro MSISDN de l'émetteur. Grâce à cet identifiant le serveur 113 est en mesure de récupérer, dans la table 118, les informations relatives à l'émetteur. Il récupère en particulier, dans la ligne 118B, la clé secrète de signature (chiffrée ou non). Grâce à ces informations le serveur 113 est en mesure de vérifier la validité de la signature 307. Cette vérification consiste, entre autres, en une inversion du chiffrement qui a été effectué sur le message résumé par l'algorithme de hachage à l'étape 202. Il s'agit de l'étape 206 de vérification de la signature. Dans l'étape 206 le déchiffrement s'effectue avec la même clé que celle qui a été utilisée pour la production de la signature car il s'agit d'algorithmes dit symétriques, donc fonctionnant suivant le principe d'une clé secrète. La clé est dans ce cas connue des seuls émetteurs et récepteurs.

Dans l'étape 206, une fois le chiffrement inversé sur la signature, le serveur 113 reproduit le processus qui a conduit à l'obtention du résumé de la transaction, c'est-à-dire le serveur 113 applique l'algorithme de calcul de l'empreinte numérique (ici MD5) sur les informations relatives à la transaction, donc sur le message 306. Il compare alors le résultat de l'inversion du chiffrement de la signature, à son propre résumé qu'il a produit. S'il y a identité, cela signifie que le message n'a pas été altéré et qu'il a bien été transmis par la personne qui prétend l'avoir transmis. S'il n'y a pas identité la transaction n'ira pas plus loin. S'il y a identité on passe à une étape 207 de composition du deuxième message pour le prestataire.

Dans la pratique, les opérations de vérification d'une signature sont effectuées par un circuit électronique indépendant et agréé par un organisme certificateur. Cette agrément apporte la garantie qu'il est impossible de produire un message chiffré (c'est-à-dire de générer ou régénérer une signature dans notre cas). Ainsi le circuit indépendant, aussi connu sous le nom de carte cryptographique, interdit, par construction, la génération ou nouvelle génération d'une signature. Ce circuit indépendant accepte en entrée le message de transaction, la signature correspondante et la clé secrète de l'abonné ayant émis le message et la signature. Le circuit indépendant produit en sortie un message signifiant « signature correcte », ou « signature incorrecte » selon les cas. Ce circuit indépendant est le seul habilité a manipuler les algorithmes de chiffrement et les clés associées. Le circuit indépendant est incapable de produire une signature. Ce circuit indépendant est, par exemple, un microcircuit connecté au serveur 113, et communiquant avec le microprocesseur 116. Le circuit indépendant est, par exemple, inséré dans le serveur 113 sous la forme d'une carte à microcircuit. Le serveur 113 comporte alors un lecteur 127 de carte à microcircuit connecté au bus, 115. Le stockage des clés de signature utilisateurs, chiffrées par une clé connue de cette seule carte à microcircuit (ou carte de chiffrement sécurisée) permet de garantir que seule cette carte à microcircuit a la possibilité de faire apparaître en clair la valeur de la clé utilisateur.

Dans l'étape 207 le serveur 113 produit une représentation numérique comportant les informations suivantes. Une référence 301 de l'article, un prix 302 unitaire, une quantité 303 d'articles, l'identité 304 réseau de l'utilisateur du terminal 101, une URL 305 d'accès au certificat X509 de l'utilisateur du terminal 101, un identifiant 308 de transaction pour introduire une variabilité au niveau de la signature calculée (un numéro de série géré par le serveur un horodatage, une valeur aléatoire, la liste n'est pas exhaustive), et la signature 307 telle que produite par le terminal 101 à l'étape 203. Appelons cette représentation numérique un message 309. Le serveur 113 produit alors, à l'étape 209, une sur-signature 310 pour le message 309. Le serveur 113 calcule, avec l'algorithme de la mémoire 117B (c'est-à-dire l'algorithme MD5), une empreinte numérique du message 309 clair. Le serveur 113 recherche alors, dans la mémoire 118, la clé privée du bi-clé du certificat X509 correspondant à l'opérateur ou à l'utilisateur du téléphone 101, suivant les variantes. Le serveur 113 utilise cette clé privée pour chiffrer, à l'étape 209, l'empreinte numérique du message 309. On obtient ainsi une sur-signature 310. Le serveur 113 assemble alors le message 309 et la sur signature 310 de ce message 309, on obtient une représentation/message 311 numérique des informations, dans une étape 210.

On rappelle qu'un certificat X509 comporte l'identité de son titulaire. Un lien vers un tel certificat peut donc être considéré comme une information sur l'identité de l'utilisateur titulaire de ce certificat.

L'identifiant 308 est, par exemple, un index temporel (connu sous le nom de timestamp dans la littérature) permettant d'indexer la transaction à partir d'une date.

On rappelle que les chiffrements, mettant en oeuvre des clés publiques et des clés privées sont des chiffrements dits asymétriques qui utilisent, par exemple, l'algorithme de chiffrement RSA.

Dans la pratique, la sur-signature 310 peut être produite par le même circuit indépendant que celui utilisé pour la vérification de la signature à l'étape 206. Dans ce cas on fournit en plus au dit circuit indépendant, une clé privée correspondant à l'abonné ou à l'opérateur suivant les variantes, et l'identifiant 308. On obtient ainsi, pour la production de la sur-signature, la même garantie de confidentialité que pour la vérification de la signature. On garantit aussi ainsi qu'une sur-signature n'est produite que si une signature valide est reçue.

On passe à l'étape 210 d'émission du message 311 vers le prestataire, c'est-à-dire vers des moyens de communication et de traitement du prestataire, par exemple le serveur 121. De tels moyens sont connus. Cette émission est réalisée, par exemple, via un e-mail. C'est le terminal 101 qui fournit au serveur 113 l'adresse électronique du prestataire. Le terminal 101 a obtenu cette adresse, par exemple lors d'une communication avec le prestataire pour éditer la transaction, ou recevoir un message de la part du prestataire. Sinon, l'abonné doit saisir un identifiant permettant d'identifier le prestataire, cet identifiant devient alors un élément du message 306 de transaction. Dans la pratique, l'émission du message 311 peut se faire par n'importe quel protocole supporté par l'opérateur du réseau 102 et le prestataire.

Dans une variante on émet un certificat X509 en même temps que le message 311. Cela évite au destinataire du message 311 d'avoir à aller chercher ledit certificat. On rappelle qu'un certificat X509 comporte une information permettant d'accéder à une liste de certificats répudiés, c'est-à-dire qu'un certificat comporte les moyens de vérifier sa validité.

On passe à l'étape 211 de réception du message par le prestataire. Dans cette étape, le prestataire obtient des informations sur une personne qui souhaite lui acheter un certain produit, dans une certaine quantité, et à un certain prix. De plus le serveur 121 est alors en possession d'une adresse 305 lui permettant d'obtenir le certificat X509 de la personne souhaitant effectuer cet achat. Ce certificat X509 comporte en particulier l'algorithme qui a été utilisé pour produire la signature, ainsi que la clé publique de la personne souhaitant effectuer la transaction. Le prestataire est donc en mesure de vérifier la validité de la transaction.

Il y a au moins trois variantes pour l'opérateur de sur-signer les transactions effectuées par ses abonnés. Une première est d'héberger au niveau du serveur 113 l'ensemble des bi-clés et certificats des abonnés. L'invention mettant alors en oeuvre un déport sécurisé et non répudiable de signature électronique (en technologie PKI) au niveau d'un terminal distant. Une deuxième est de produire au niveau de l'opérateur l'ensemble des bi-clés et certificats associés des abonnés et de les héberger au niveau du serveur 113 comme décrit dans la première variante. Une troisième est de produire un unique bi-clé (au niveau de l'opérateur) et de générer des certificats différents et uniques dans leur contenu pour chacun des abonnés (par exemple basé sur le numéro de série de ceux ci) et d'héberger le tout comme décrit au niveau des première et deuxième variantes.

Dans l'étape 209, le serveur 121 applique un déchiffrement à la sur-signature 310 produite par le serveur 113. Ce déchiffrement produit un message résultant d'un précédent hachage effectué par le serveur 113. La connaissance de l'algorithme de hachage permet au serveur 121 de recalculer ce hachage à partir du message 309, puis de comparer cette production au résultat du déchiffrement. S'il y a identité cela signifie que la personne ayant passé la transaction est bien celle qui prétend l'avoir fait. Cela signifie aussi que le contenu de la transaction n'a pas été altéré au cours de la transmission. Le prestataire peut alors honorer, en toute confiance, sa part de la transaction.

Ainsi une transaction est réalisée par l'émission d'un premier message, de l'utilisateur vers l'opérateur, ce premier message comportant la transaction T et sa signature, puis par l'émission d'un deuxième message, de l'opérateur vers le prestataire, comportant une deuxième transaction et sa sur-signature. La deuxième transaction comporte alors la transaction T, sa signature et des données ajoutées par l'opérateur comme un horodatage.

L'invention présente ainsi de nombreux intérêts. En effet la production de signatures échangées entre le terminal 101 et le serveur 113 est effectuée avec des algorithmes symétriques. Ces algorithmes sont très robustes et nécessitent peu de puissance de calcul dans leur mise en oeuvre. Cela permet de s'assurer à moindre coût un canal de communication fiable entre le terminal 101 et le serveur 113. De plus dans la mesure où l'opérateur gérant le serveur 113 dispose de nombreux moyens pour identifier ses abonnés, c'est-à-dire les personnes qui émettent des messages sur le réseau qu'il gère, la gestion des clés secrètes en est grandement simplifiée. L'opérateur sera toujours en mesure de savoir qui a émis le message indépendamment de la valeur de la clé secrète utilisée. Cela diminue ainsi le nombre de clés secrètes à gérer. Cela diminue aussi la puissance de calculs nécessaires à la mise en oeuvre d'une production de signature sur le terminal 101. Cela a pour effet de raccourcir les temps d'attente de l'utilisateur, et aussi de prolonger la durée de vie de la batterie du terminal 101.

Dans l'invention c'est l'opérateur, gérant le serveur 113, qui joue le rôle d'autorité de certification, c'est-à-dire que lorsqu'un prestataire reçoit une transaction, il interroge le serveur 113, ou un autre serveur de l'opérateur, pour obtenir le certificat X509 ayant effectué la transaction, l'opérateur se portant garant pour ses abonnés et le prestataire en sur-signant avec son propre bi-clé la transaction abonné / prestataire. On remarque cependant que la puissance de calcul nécessaires à la mise en oeuvre des technologies PKI est déportée sur le serveur 113 de l'opérateur. Un tel serveur est en général bien plus puissant qu'un terminal 101. Cela n'est donc pas gênant, mais plutôt avantageux. De même un tel serveur ne fonctionne pas sur batterie.

L'invention permet de plus à l'opérateur de proposer des services supplémentaires à ses abonnés, dans le cadre des variantes, comme la gestion d'un certificat X509. L'abonné n'a alors plus à se soucier d'effectuer des démarches pour obtenir un tel certificat puisque la plupart du temps l'opérateur est en possession de toutes les informations nécessaires à l'obtention et à la production d'un tel certificat au moment où l'abonné passe un contrat d'abonnement avec l'opérateur. On voit ici que l'opérateur remplit bien toutes les conditions pour jouer le rôle d'autorité d'enregistrement.

L'invention est aussi réalisable si l'opérateur n'est pas autorité de certification. Dans ce cas, il suffit que l'opérateur utilise un certificat qui est le sien pour produire la sur-signature 310. Dans ce cas c'est effectivement l'opérateur qui se porte garant pour ses abonnés. L'opérateur peut le faire car il a accès aux renseignements fournis par ses abonnés lors de la souscription d'un abonnement. L'opérateur est donc en mesure de refuser des transactions selon certains critères, par exemple, montant trop élevé, impossibilité d'identifier l'abonné (en cas d'utilisation d'une carte prépayée anonyme par exemple). L'opérateur a donc une visibilité totale sur les transactions effectuées sur son réseau, ce qui constitue aussi une garantie pour les prestataires.

Les paiements, correspondant aux transactions, peuvent être effectués par l'opérateur qui peut les répercute alors sur la facture de l'abonné.

Dans une variante de l'invention on prévoit un chiffrement de messages échangés entre le terminal et les serveurs. Ce chiffrement est soit intrinsèque aux protocoles utilisés, soit mis en oeuvre par le terminal et les serveurs. Ce chiffrement fournit une assurance de confidentialité supplémentaire.

Dans une variante, les informations enregistrées dans la table 118 sont chiffrées, en particulier la ligne 118B. Dans ce cas la clé de déchiffrement, ou clé de stockage, n'est connue que des seuls organes du serveur 113 ayant à utiliser ces informations, par exemple le circuit indépendant.

Dans une variante de l'invention la transaction T est transmise à l'utilisateur par le prestataire sous la forme d'une proposition. Cette proposition est alors signée par le prestataire. Cette proposition transite par l'opérateur. L'opérateur se charge alors de vérifier la validité de la signature de la proposition. Si cette signature est valide, l'opérateur transmet alors la proposition à l'utilisateur. La réception et la consultation de cette proposition correspondent alors à l'étape 201. L'utilisateur recevant une telle proposition est alors assuré de sa validité, car cette validité est garantie par l'opérateur.

## Revendications

1. Procédé de signature électronique **caractérisé en ce qu'**il comporte les étapes suivantes : .
- on édite (201) sur un terminal d'un utilisateur des informations relatives à la nature d'une transaction T entre l'utilisateur et un prestataire,
- on produit (203), sur le terminal, une signature de la transaction T pour authentifier la transaction T et l'auteur de la transaction T,
- on produit, sur le terminal, un premier message comportant les informations relatives à la nature de la transaction T et sa signature, ladite signature est produite par la mise en oeuvre d'un algorithme symétrique,
- on émet (204), depuis le terminal, le premier message vers le serveur d'un opérateur de télécommunication,
- on reçoit (205), sur le serveur de l'opérateur de télécommunication, le premier message,
- on identifie, sur le serveur, l'utilisateur du terminal,
- on vérifie (206), sur le serveur, la validité de la signature,
- on produit (207), sur le serveur, une deuxième transaction comportant la transaction T, la signature de l'utilisateur du terminal, des informations relatives à l'identité de l'utilisateur du terminal,
- on produit (209) une signature correspondant à la deuxième transaction, cette signature étant appelée sur-signature de l'opérateur, ladite sur-signature est produite par la mise en oeuvre d'un algorithme dit asymétrique,
- on émet (210), depuis le serveur, un deuxième message comportant la deuxième transaction et sa sur-signature par l'opérateur vers le prestataire partie à la transaction T.

2. Procédé selon la revendication 1, **caractérisé en ce que** un bi-clé utilisé (209) pour le calcul de la sur-signature est celui rattaché à l'opérateur.

3. Procédé selon l'une des revendications 1 ou 2, **caractérisé en ce qu'**on produit la signature de la transaction T en utilisant, un algorithme de chiffrement initialisé par une clé de signature propre à l'utilisateur du terminal.

4. Procédé selon l'une des revendications 1 à 3, **caractérisé en ce que** le deuxième message et la sur-signature sont émis via un message court.

5. Procédé selon l'une des revendications 1 à 4, **caractérisé en ce que** les informations sur l'identité de l'utilisateur sont un lien vers un certificat, de préférence selon la norme X509, délivré par une autorité de certification.

6. Procédé selon l'une des revendications 1 à 5, **caractérisé en ce que** le deuxième message comporte en plus un identifiant de transaction.

7. Procédé selon l'une des revendications 1 à 6, **caractérisé en ce que** la sur-signature est établie par l'utilisation du bi-clé et du certificat X509 de l'abonné, partie à la transaction T, hébergé chez l'opérateur.

8. Procédé selon l'une des revendications 1 à 7, **caractérisé en ce que** la sur-signature est établie par l'utilisation d'un bi-clé particulier, hébergé chez l'opérateur, et pour lequel plusieurs certificats X509 d'abonnés ont été générés, ces certificats étant tous uniques de par leur numéro de série.

9. Procédé selon l'une des revendications 1 à 8, **caractérisé en ce que** l'opérateur analyse la signature de la transaction signée par le prestataire et émise par le prestataire avant de l'envoyer à l'abonné, cette vérification permettant à l'abonné de lui garantir la validité de la transaction avant signature.

## Claims

1. Electronic signature process **characterised by** the fact that it includes the following steps:
- data relating to the nature of a transaction T between a user and a provider are edited (201) on the user's terminal,
- a signature of the transaction T is produced (203), on the terminal, to authenticate the transaction T and the author of the transaction T,
- a first message is produced, on the terminal, including the data relating to the nature of the transaction T and its signature, the said signature is produced by implementation of a symmetrical algorithm,
- the first message is transmitted (204), from the terminal, to the server of a telecommunications operator,
- the first message is received (205) on the server of the telecommunications operator,
- the user of the terminal is identified on the server,
- the validity of the signature is verified (206) on the server,
- a second transaction including the transaction T, the signature of the user of the terminal and data relating to the identity of the user of the terminal is produced (207) on the server,
- a signature corresponding to the second transaction is produced (209), this signature being called the over-signature of the operator, the said over-signature is produced by implementation of an asymmetrical algorithm,
- a second message including the second transaction and its over-signature by the operator is transmitted (210) from the server to the provider party to the transaction T.

2. Process as described in claim 1, **characterised by** the fact that a key-pair used (209) for calculation of the over-signature is that attached to the operator.

3. Process as described in one of claims 1 or 2, **characterised by** the fact that the signature of the transaction T is produced using an encryption algorithm initialised by a signature key belonging to the user of the terminal.

4. Process as described in one of claims 1 to 3, **characterised by** the fact that the second message and the over-signature are transmitted via a short message.

5. Process as described in one of claims 1 to 4, **characterised by** the fact that the data relating to the identity of the user are a link to a certificate, preferably in accordance with standard X509, issued by a certification authority.

6. Process as described in one of claims 1 to 5, **characterised by** the fact that the second message also includes a transaction identifier.

7. Process as described in one of claims 1 to 6, **characterised by** the fact that the over-signature is produced using the key pair and the X509 certificate of the subscriber, party to the transaction T, held by the operator.

8. Process as described in one of claims 1 to 7, **characterised by** the fact that the over-signature is produced using a specific key pair, held by the operator, and for which a plurality of subscriber X509 certificates has been generated, these certificates all being unique due to their serial numbers.

9. Process as described in one of claims 1 to 8, **characterised by** the fact that the operator analyses the signature of the transaction signed by the provider and transmitted by the provider prior to sending it to the subscriber, this verification allowing the subscriber to be certain of the validity of the transaction before signature.

## Patentansprüche

1. Verfahren zur digitalen Unterschrift, **dadurch gekennzeichnet, dass** dieses die folgenden Stufen umfasst:
- auf einem Terminal eines Benutzers werden Informationen bezüglich der Art einer Transaktion T zwischen dem Benutzer und einem Provider editiert (201),
- es wird auf dem Terminal eine Unterschrift der Transaktion T erstellt (203), um die Transaktion T und den Urheber der Transaktion T zu authentifizieren,
- es wird auf dem Terminal eine erste Mitteilung erzeugt, welche die Informationen bezüglich der Art der Transaktion T und deren Unterschrift enthält, wobei besagte Unterschrift durch die Ausführung eines symmetrischen Algorithmus erstellt wird,
- es wird von dem Terminal aus die erste Mitteilung zu dem Server eines Telekommunikationsbetreibers gesendet (204),
- es wird auf dem Server des Telekommunikationsbetreibers die erste Mitteilung empfangen (205),
- es wird auf dem Server der Benutzer des Terminals identifiziert,
- es wird auf dem Server die Gültigkeit der Unterschrift überprüft (206),
- es wird auf dem Server eine zweite Transaktion erzeugt (207), welche die Transaktion T, die Unterschrift des Benutzers des Terminals und Informationen bezüglich der Identität des Benutzers des Terminals umfasst,
- es wird eine Unterschrift erstellt (209), welche der zweiten Transaktion entspricht, wobei diese Unterschrift als Übersignatur des Betreibers bezeichnet wird und besagte Übersignatur durch die Ausführung eines sogenannten asymmetrischen Algorithmus erstellt wird,
- es wird von dem Server aus eine zweite Mitteilung, welche die zweite Transaktion und deren Übersignatur durch den Betreiber umfasst, zu dem an der Transaktion T beteiligten Provider gesendet (210).

2. Verfahren nach Anspruch 1, **dadurch gekennzeichnet, dass** ein Schlüsselpaar, welches für die Berechnung der Übersignatur verwendet wird (209), jenes ist, das dem Betreiber zugehörig ist.

3. Verfahren nach einem der Ansprüche 1 oder 2, **dadurch gekennzeichnet, dass** die Unterschrift der Transaktion T durch Verwendung eines Verschlüsselungsalgorithmus erstellt wird, der durch einen Unterschriftenschlüssel initialisiert wird, der dem Benutzer des Terminals eigen ist.

4. Verfahren nach einem der Ansprüche 1 bis 3, **dadurch gekennzeichnet, dass** die zweite Mitteilung und die Übersignatur mittels einer Kurzmitteilung gesendet werden.

5. Verfahren nach einem der Ansprüche 1 bis 4, **dadurch gekennzeichnet, dass** die Informationen über die Identität des Benutzers ein Bindeglied zu einem von einer Zertifizierungsbehörde ausgestellten Zertifikat sind, das vorzugsweise dem X.509-Standard entspricht.

6. Verfahren nach einem der Ansprüche 1 bis 5, **dadurch gekennzeichnet, dass** die zweite Mitteilung weiterhin eine Transaktionskennung aufweist.

7. Verfahren nach einem der Ansprüche 1 bis 6, **dadurch gekennzeichnet, dass** die Übersignatur festgelegt wird durch die Verwendung des Schlüsselpaares und des X.509-Zertifikats des an der Transaktion T beteiligten Teilnehmers, welches beim Betreiber verwahrt ist.

8. Verfahren nach einem der Ansprüche 1 bis 7, **dadurch gekennzeichnet, dass** die Übersignatur festgelegt wird durch die Verwendung eines besonderen Schlüsselpaares, das bei dem Betreiber verwahrt ist und für das mehrere X.509-Teilnehmerzertifikate erzeugt wurden, wobei diese Zertifikate im Bezug auf ihre Seriennummer alle einmalig sind.

9. Verfahren nach einem der Ansprüche 1 bis 8, **dadurch gekennzeichnet, dass** der Betreiber die Unterschrift der vom Provider signierten und vom Provider gesandten Transaktion genau überprüft, bevor er sie an den Teilnehmer sendet, wobei diese Überprüfung dem Teilnehmer gestattet, sich der Gültigkeit der Transaktion vor Unterschrift zu versichern.
